# EUROPÄISCHE PATENTANMELDUNG

(11) **EP 2 899 414 A1**
(43) Veröffentlichungstag der Anmeldung: **29.07.2015**
(21) Anmeldenummer: 14152298.7
(22) Anmeldetag: 23.01.2014
(51) Int. Cl.: F16C 27/04, H02K 5/24

(54) **Gedämpfte Lagerung einer Rotorwelle**

(71) Anmelder: Siemens Aktiengesellschaft, 80333 München (DE)
(72) Erfinder: Bauer, Christian, 91728 Gnotzheim (DE)

(57) **Zusammenfassung**

Die Erfindung betrifft eine Anordnung zum gedämpften Lagern einer Rotorwelle (1) einer elektrischen Maschine. Weiterhin betrifft die Erfindung eine elektrische Maschine mit einer Rotorwelle (1) und zumindest einer derartigen Anordnung. Zusätzlich betrifft die Erfindung ein System zum gedämpften Lagern einer elektrischen Maschine. Ferner betrifft die Erfindung ein Verfahren zum gedämpften Lagern einer Rotorwelle (1) einer derartigen elektrischen Maschine. Schließlich betrifft die Erfindung ein Verfahren zum Betrieb einer derartigen elektrischen Maschine. Um eine Alternative zum gedämpften Lagern einer Rotorwelle (1) bereitzustellen wird vorgeschlagen, dass die Anordnung eine Lagereinheit (2), welche zwischen der Rotorwelle (1) und einem Gehäuse (3) der elektrischen Maschine angeordnet ist, und ein Dämpfungselement (4) aufweist, welches zwischen der Lagereinheit (2) und der Rotorwelle (1) oder zwischen der Lagereinheit (2) und dem Gehäuse (3) angeordnet ist, wobei das Dämpfungselement (4) ein Geflecht aus Metalldraht (5) aufweist.

## Beschreibung

Die Erfindung betrifft eine Anordnung zum gedämpften Lagern einer Rotorwelle einer elektrischen Maschine. Weiterhin betrifft die Erfindung eine elektrische Maschine mit einer Rotorwelle und zumindest einer derartigen Anordnung. Zusätzlich betrifft die Erfindung ein System zum gedämpften Lagern einer elektrischen Maschine. Ferner betrifft die Erfindung ein Verfahren zum gedämpften Lagern einer Rotorwelle einer derartigen elektrischen Maschine. Schließlich betrifft die Erfindung ein Verfahren zum Betrieb einer derartigen elektrischen Maschine.

Eine derartige Anordnung, ein derartiges System und derartige Verfahren kommen beispielsweise Elektromotoren oder Generatoren zum Einsatz. Lagert man einen beliebigen Rotor drehend, ergeben sich je nach Art der Lagerung Eigenfrequenzen mit den zugehörigen Eigenformen. Lagerungen von Rotoren können beispielsweise ausgeführt sein als hydrodynamische Gleitlager, hydrostatische Gleitlager, Wälzlager, aktive und passive Magnetlager oder Luftlager.

Man unterscheidet hierbei zwischen unterkritischen Rotoren und überkritischen Rotoren. Liegt die erste Eigenfrequenz des Systems oberhalb seiner Betriebsdrehzahl, so spricht man von einem unterkritischen Rotor. Liegen Eigenfrequenzen unterhalb der Betriebsdrehzahl handelt es sich um einen überkritischen Rotor. In diesem Fall benötigt man eine äußere Dämpfung einer bestimmten Größe an den Lagerstellen, um die Eigenfrequenzen bis zur Betriebsdrehzahl durchfahren oder den Rotor in seiner Eigenfrequenz betreiben zu können. Des Weiteren ist es möglich, dass infolge innerer Dämpfung des Rotors oder durch das Trägermedium von Gleitlagern bedingt eine Instabilität des Rotorsystems auftritt. Um dies zu verhindern, wird ebenfalls eine äußere Dämpfung in den Lagerstellen benötigt.

Bei einer Rotorlagerung mit nur sehr geringer äußerer Dämpfung an den Lagerstellen ist es nicht möglich, den Rotor überkritisch zu betreiben. Eine Art der Lagerung, die nur geringe Dämpfung generiert, wird z.B. Wälzlager realisiert. Bei Gleitlagern kann Dämpfung durch das Trägermedium erzeugt werden. Diese ist jedoch häufig nicht groß genug, um den Rotor in einer seiner Eigenfrequenzen betreiben und Instabilitäten in einem beliebigen Drehzahlbereich vermeiden zu können. Passive Magnetlager und Luftlager verfügen ebenfalls über nur sehr geringe Dämpfungseigenschaften. Bei aktiven Magnetlagern wird das Rotorsystem durch äußere Magnetkräfte stabil gehalten und Lagerdämpfung erzeugt.

Reicht die Dämpfung in den Lagerstellen nicht aus, gibt es verschiedene Möglichkeiten, zusätzliche Dämpfung zu erzeugen, z. B. Gummielemente unterhalb des Lagers oder Quetschöldämpfer unterhalb des Lagers oder direkt am Rotor.

Aus der DE 197 01 178 A1 ist ein Lagerring bekannt, der eine innere und eine äußere Lagerschale aufweist, welche mit radialem Abstand zueinander angeordnet sind und in deren so gebildetem Zwischenraum ein die beiden Lagerschalen drehfest verbindendes Element angeordnet ist, welches als ein Drahtgestrick ausgeführt ist.

Aus der DE 20 2010 004 482 U1 ist ein Axialwälzlager bekannt, welches einen oberen Ring, einen unteren Ring und zwischen den Ringen Kugeln aufweist, wobei für die Ringe ein gepresstes Band aus Metallfasern verwendet wird und wobei die Ringe mit Kunststoffschalen übergossen sind.

Der Erfindung liegt die Aufgabe zugrunde, eine Alternative zum gedämpften Lagern einer Rotorwelle bereitzustellen.

Diese Aufgabe wird durch eine Anordnung der eingangs genannten Art dadurch gelöst, dass die Anordnung eine Lagereinheit, welche zwischen der Rotorwelle und einem Gehäuse der elektrischen Maschine angeordnet ist, und ein Dämpfungselement aufweist, welches zwischen der Lagereinheit und der Rotorwelle oder zwischen der Lagereinheit und dem Gehäuse angeordnet ist, wobei das Dämpfungselement ein Geflecht aus Metalldraht aufweist.

Weiterhin wird diese Aufgabe durch eine elektrische Maschine der eingangs genannten Art dadurch gelöst, dass die elektrische Maschine zumindest eine derartige Anordnung aufweist.

Zusätzlich wird diese Aufgabe durch ein System zum gedämpften Lagern einer elektrischen Maschine dadurch gelöst, dass die elektrische Maschine einen Stator und einen Rotor mit einer Rotorwelle aufweist, wobei das System umfasst:
- eine Recheneinheit,
- eine Umrichtereinheit,
- zumindest eine Anordnung zum gedämpften Lagern der Rotorwelle,
   wobei die Recheneinheit mit der Umrichtereinheit und die Umrichtereinheit mit dem Stator der elektrischen Maschine verbindbar sind,
   wobei die jeweilige Anordnung eine Lagereinheit, welche zwischen der Rotorwelle und einem Gehäuse der elektrischen Maschine angeordnet ist, und ein Dämpfungselement aufweist, welches zwischen der Lagereinheit und der Rotorwelle oder zwischen der Lagereinheit und dem Gehäuse angeordnet ist, wobei das Dämpfungselement ein Geflecht aus Metalldraht aufweist, wobei die jeweilige Anordnung ein Sensorelement und ein mit dem Sensorelement wirkverbundenes Kraftelement aufweist, wobei Eigenfrequenzen der gedämpft gelagerten Rotorwelle und/oder der elektrischen Maschine mittels des Sensorelementes ermittelbar sind, wobei die Eigenfrequenzen vom Sensorelement an die Recheneinheit übermittelbar sind, wobei Sollwerte für das Kraftelement durch die Recheneinheit ermittelbar sind, wobei die Sollwerte von der Recheneinheit an die Umrichtereinheit übermittelbar sind, wobei das Kraftelement durch die Umrichtereinheit gemäß den Sollwerten derart beaufschlagbar ist, dass das Dämpfungselement mittels des Kraftelementes derart beaufschlagbar ist, dass die Rotorwelle und/oder die elektrische Maschine überkritisch betreibbar ist oder derart, dass Eigenfrequenzen der gedämpft gelagerten Rotorwelle größer als eine Betriebsfrequenz der elektrische Maschine sind, wobei, falls die Rotorwelle und/oder die elektrische Maschine überkritisch betreibbar ist, die Eigenfrequenzen bis zum Erreichen der Betriebsfrequenz oder des Stillstands mit einer größtmöglichen, zeitlichen Drehzahländerung durchfahrbar sind.

Ferner wird diese Aufgabe durch ein Verfahren zum gedämpften Lagern einer Rotorwelle einer derartigen elektrischen Maschine dadurch gelöst, die jeweilige Anordnung eine Lagereinheit, welche zwischen der Rotorwelle und einem Gehäuse der elektrischen Maschine angeordnet ist, und ein Dämpfungselement aufweist, welches zwischen der Lagereinheit und der Rotorwelle oder zwischen der Lagereinheit und dem Gehäuse angeordnet ist, wobei das Dämpfungselement ein Geflecht aus Metalldraht aufweist, wobei die jeweilige Anordnung ein Sensorelement und ein mit dem Sensorelement wirkverbundenes Kraftelement aufweist, aufweisend die Verfahrensschritte:
- Erfassen einer Federkonstante des Dämpfungselementes, einer Dämpfungskonstante des Dämpfungselementes und/oder einer auf das Dämpfungselement wirkenden Vorspannkraft mittels des Sensorelementes,
- Regelbares Vorspannen des Dämpfungselementes mittels des Kraftelementes derart, dass die Rotorwelle und/oder die elektrische Maschine überkritisch betreibbar ist oder derart, dass Eigenfrequenzen der gedämpft gelagerten Rotorwelle größer als eine Betriebsfrequenz der elektrische Maschine sind.

Schließlich wird diese Aufgabe durch ein Verfahren zum Betrieb einer elektrischen Maschine dadurch gelöst, dass die elektrische Maschine einen Stator und einen Rotor mit einer Rotorwelle aufweist, wobei eine Recheneinheit und eine Umrichtereinheit vorgesehen sind, wobei die Recheneinheit mit der Umrichtereinheit und die Umrichtereinheit mit dem Stator der elektrischen Maschine verbunden sind, wobei zumindest eine Anordnung zum gedämpften Lagern der Rotorwelle vorgesehen ist, wobei die jeweilige Anordnung eine Lagereinheit, welche zwischen der Rotorwelle und einem Gehäuse der elektrischen Maschine angeordnet ist, und ein Dämpfungselement aufweist, welches zwischen der Lagereinheit und der Rotorwelle oder zwischen der Lagereinheit und dem Gehäuse angeordnet ist, wobei das Dämpfungselement ein Geflecht aus Metalldraht aufweist, wobei die jeweilige Anordnung ein Sensorelement und ein mit dem Sensorelement wirkverbundenes Kraftelement aufweist,
aufweisend die Verfahrensschritte:
- Ermitteln der Eigenfrequenzen der gedämpft gelagerten Rotorwelle und/oder der elektrischen Maschine mittels des Sensorelementes,
- Übermitteln der Eigenfrequenzen vom Sensorelement an die Recheneinheit,
- Ermitteln von Sollwerten für das Kraftelement durch die Recheneinheit,
- Übermitteln der Sollwerte von der Recheneinheit an die Umrichtereinheit,
- Beaufschlagen des Kraftelementes durch die Umrichtereinheit gemäß den Sollwerten derart, dass das Dämpfungselement mittels des Kraftelementes derart beaufschlagt wird, dass die Rotorwelle und/oder die elektrische Maschine überkritisch betreibbar ist oder derart, dass Eigenfrequenzen der gedämpft gelagerten Rotorwelle größer als eine Betriebsfrequenz der elektrische Maschine sind,
- falls die Rotorwelle und/oder die elektrische Maschine überkritisch betrieben wird: Durchfahren der Eigenfrequenzen bis zum Erreichen der Betriebsfrequenz oder des Stillstands mit einer größtmöglichen, zeitlichen Drehzahländerung.

Das Dämpfungselement kann beispielsweise aus gepresstem Metalldraht hergestellt werden und ist insbesondere um die Lagerstelle herum angebracht, so dass das Dämpfungselement radial außen an der Lagereinheit angeordnet ist und die Lagereinheit umschließt. Von radial innen nach radial außen sind somit zunächst die Rotorwelle, dann die Lagereinheit, anschließend das Dämpfungselement und schließlich das Gehäuse der elektrischen Maschine angeordnet.

Alternativ kann das Dämpfungselement radial außen an der Rotorwelle angeordnet sein und die Rotorwelle umschließen. Entsprechend sind von radial innen nach radial außen zunächst die Rotorwelle, dann das Dämpfungselement, anschließend die Lagereinheit und schließlich das Gehäuse der elektrischen Maschine angeordnet. Folglich umhüllt die Lagereinheit, welche den Drehfreiheitsgrad für die Rotorwelle zur Verfügung stellt, das Dämpfungselement, so dass die eigentliche Lagerstelle sich auf der Außenseite des Dämpfungselementes befindet.

Durch das Dämpfungselement wird eine zusätzliche, große Dämpfungswirkung in das System der gelagerten Rotorwelle eingebracht. Während einer Schwingung der Rotorwelle in Bezug auf das Gehäuse wird durch die in den Drahtwindungen entstehende Reibung die Dämpfung erzeugt, wobei die Dämpfung als äußere Dämpfung wirkt.

Prinzipiell können auch zwei derartige Dämpfungselemente vorgesehen werden, zwischen welchen die Lagereinheit angeordnet ist. Diese Ausführungsform ermöglicht eine besonders große Dämpfung in das System der gedämpft gelagerten Rotorwelle anzubringen.

Die vorgeschlagene Lösung kann, wie oben beschrieben, zur gedämpften Lagerung von radialen Kräften verwendet werden. Auch eine gedämpfte Lagerung von axialen Kräften kann mit der vorgeschlagenen Lösung bewerkstelligt werden, indem das Dämpfungselement und die Lagereinheit in axialer Richtung zwischen der Rotorwelle bzw. einem Teil der Rotorwelle und dem Gehäuse angeordnet sind. Zusätzlich sind auch Mischformen möglich, mittels welchen eine Überlagerung von radialen Kräften und axialen Kräften gedämpft aufgenommen werden.

Die Wirkverbindung des Kraftelementes mit dem Sensorelement kann beispielsweise dadurch verwirklicht werden, dass ein direkter Datenaustausch mittels einer Drahtverbindung oder einer drahtlosen Verbindung zwischen dem Sensorelement und dem Kraftelement besteht. Denkbar ist auch, dass die Wirkverbindung mittelbar ausgestaltet wird, beispielsweise indem Daten des Sensorelementes über die Recheneinheit und die Umrichtereinheit schließlich eine bestimmte Aktion des Kraftelementes bewirken.

Das vorgeschlagene Verfahren zum gedämpften Lagern der Rotorwelle sieht vor, dass die Federkonstante des Dämpfungselementes, die Dämpfungskonstante des Dämpfungselementes und/oder die auf das Dämpfungselement wirkende Vorspannkraft erfasst wird, wobei hierzu das Sensorelement zum Einsatz kommt. Weiterhin ist vorgesehen, dass das Dämpfungselement regelbar vorspannbar ist, wobei hierzu das Kraftelement und beispielsweise eine Recheneinheit eingesetzt werden.

Prinzipiell kann die Vorspannkraft als Druck- oder Zugkraft ausgestaltet sein. Insbesondere wenn zwei oder mehr Kraftelemente vorgesehen sind, kann auch eine Kombination aus verschiedenen Druck- oder Zugkräften realisiert werden, welche insbesondere in unterschiedlichen Richtungen auf das Dämpfungselement wirkenden bzw. an unterschiedlichen Punkten am Dämpfungselement angreifen. Derart lässt sich eine Anisotropie der Dämpfungseigenschaften erreichen, wodurch in unterschiedliche Richtungen wirkende Schwingungsmoden unterschiedlich stark gedämpft werden können.

Beim vorgeschlagenen Verfahren zum Betrieb einer elektrischen Maschine und dem entsprechenden System ist insbesondere bei einem überkritischen Betrieb vorgesehen, dass die Eigenfrequenzen der Rotorwelle und/oder der elektrischen Maschine möglichst schnell durchfahren werden. Entsprechend liegt beim Hochlaufen der elektrischen Maschine die positive zeitliche Drehzahländerung und beim Auslaufen der elektrischen Maschine eine negative zeitliche Drehzahländerung vor. Dabei ist die größtmögliche, zeitliche Drehzahländerung insbesondere jene, welche sowohl von der Umrichtereinheit als auch von der elektrischen Maschine technisch dauerhaft realisierbar ist, ohne dass dabei eine Beschädigung der Ausrüstung oder eine übermäßige Alterung bzw. ein übermäßiger Verschleiß der Ausrüstung einhergeht.

Insbesondere kann vorgesehen sein, dass das Sensorelement zur Ermittlung der Eigenfrequenzen Test-Impulse einprägt und die Antwort des Systems auf die Test-Impulse ermittelt. Die Umrichtereinheit ist insbesondere zur Versorgung des Stators der elektrischen Maschine mit elektrischer Energie vorgesehen und beaufschlagt den Stator entsprechend den Vorgaben der Recheneinheit. Die Recheneinheit kann beispielsweise als Mikrocontroller, CPU oder dergleichen ausgeführt sein und insbesondere in das Sensorelement, das Kraftelement oder die Umrichtereinheit integriert werden. Alternativ kann die Recheneinheit in einer übergeordneten Steuerung oder der Umrichtereinheit integriert sein.

Bei einer vorteilhaften Ausgestaltung der Erfindung ist die Lagereinheit als Wälzlager oder als Gleitlager ausgebildet.

Wälzlager verfügen üblicherweise über keine oder eine nur sehr geringe eigene Dämpfung. Die zusätzliche, äußere Dämpfung der vorgeschlagenen Anordnung ermöglicht, ein Rotorsystem auch dann überkritisch zu betreiben, wenn solche Lagerungsarten zum Einsatz kommen, die nur sehr wenig eigene Dämpfung generieren. Dies ermöglicht beispielsweise, die Lagerung eines vergleichsweise leistungsstarken Elektromotors mit einer Achshöhe von 450 mm und mehr mittels der vorgeschlagenen Anordnung mit einem Wälzlager zu bewerkstelligen. Derart große und leistungsstarke elektrische Maschinen werden üblicherweise überkritisch betrieben, so dass die Betriebsdrehzahl größer als zumindest eine Eigenfrequenz der elektrischen Maschine ist. Dabei bietet die Verwendung eines Wälzlagers mehrere Vorteile, wie zum Beispiel eine vergleichsweise einfache Montage und Wartung. Dabei wird der Nachteil des Wälzlagers der sehr geringen Dämpfung durch das Dämpfungselement mehr als ausgeglichen, so dass große elektrische Maschinen Dank der vorgeschlagenen Anordnung auch mit einem Wälzlager überkritisch betrieben werden können.

Gleitlager können selbst eine äußere Dämpfung erzeugen, so dass die Verwendung eines Gleitlagers bei der vorgeschlagenen Anordnung ermöglicht, die Dämpfung des Gesamtsystems weiter zu erhöhen. Dadurch kann die Rotorwelle in oder über einer seiner Eigenfrequenzen betrieben werden, da die Antwortamplituden einer belieben Anregung infolge der hohen Dämpfung gering bleiben und eine Instabilität des Systems verhindert wird. Somit werden überkritische Rotoren mit praktisch uneingeschränktem Drehzahlstellbereich möglich.

Bei einer weiteren vorteilhaften Ausgestaltung der Erfindung weist das Dämpfungselement einen inneren Ring und einen äußeren Ring auf, wobei das Geflecht aus Metalldraht zwischen dem inneren Ring und dem äußeren Ring angeordnet ist.

Durch den inneren Ring und dem äußeren Ring wird das Geflecht aus Metalldraht sicher eingefasst und in seiner Position fixiert. Weiterhin wird dadurch eine besonders leichte Wartung ermöglicht, da ein verschlissenes Metallgeflecht leicht ausgetauscht werden kann. Dies wird beispielsweise dadurch erreicht, dass lediglich einer der Ringe entfernt werden muss, um das Metallgeflecht zu ersetzen und anschließend den entfernten Ring wieder anzubringen.

Weiterhin können die beiden Ringe auch zur Vorspannung des Dämpfungselementes verwendet werden, indem auf einen der Ringe beispielsweise eine Kraft in die eine axiale Richtung und auf den anderen Ring eine Kraft in die entgegengesetzte axiale Richtung ausgeübt wird.

Bei einer weiteren vorteilhaften Ausgestaltung der Erfindung weist der innere Ring und/oder der äußere Ring dabei einen L-förmigen Querschnitt auf.

Durch den L-förmigen Querschnitt kann das Metallgeflecht leicht von widrigen, äußeren Einflüssen, wie zum Beispiel Staub und anderen Verunreinigungen, geschützt werden. Insbesondere wenn sowohl der innere Ring als auch der äußere Ring einen L-förmigen Querschnitt aufweisen und die beiden L-förmigen Querschnitte derart angeordnet sind, dass ein rechteckiger Querschnitt gebildet wird, ist ein besonders zuverlässiger Schutz des Metallgeflechtes erreichbar. Weiterhin kann durch eine entsprechende Anordnung der kürzere Steg des L-förmigen Querschnitts dazu dienen, das Metallgeflecht in axialer Richtung zu fixieren, wodurch eine zuverlässige Einstellung einer Vorspannkraft des Dämpfungselementes ermöglicht wird.

Bei einer alternativen vorteilhaften Ausgestaltung der Erfindung weist der innere Ring und/oder der äußere Ring einen keilförmigen Querschnitt auf.

Dank des keilförmigen Querschnitts kann eine in axialer Richtung auf das Dämpfungselement wirkende Vorspannkraft dazu verwendet werden, auf die Lagereinheit und/oder die Rotorwelle eine modifizierte Vorspannkraft auszuüben, welche eine Komponente sowohl in axialer Richtung als auch in radialer Richtung aufweist. Dies kann besonders bei elektrischen Maschinen von Vorteil sein, bei denen in axialer und radialer Richtung wirkende Kräfte zuverlässig zu lagern sind und in entsprechende Richtungen ausgeprägte Schwingungen zuverlässig zu dämpfen sind.

Prinzipiell ist dabei auch denkbar, dass einer der beiden Ringe einen L-förmigen Querschnitt aufweist und der andere Ring einen keilförmigen Querschnitt aufweist.

Bei einer weiteren vorteilhaften Ausgestaltung der Erfindung weist das Dämpfungselement eine Federkonstante und eine Dämpfungskonstante auf, wobei das Dämpfungselement derart vorspannbar ist, dass das Dämpfungselement eine vorgebbare Federkonstante und/oder eine vorgebbare Dämpfungskonstante aufweist.

Die Steifigkeit des Dämpfungselements hängt unter anderem von der auf das Metallgeflecht aufgebrachten Vorspannkraft ab. Über diese Kraft lässt sich die Steifigkeit des Dämpfungselements einstellen. Insbesondere kann die vorgebbare Federkonstante und/oder die vorgebbare Dämpfungskonstante vorab ermittelt werden, beispielsweise indem entsprechende Berechnungen oder Versuche durchgeführt werden. Vorzugsweise wird die vorgebbare Federkonstante und/oder die vorgebbare Dämpfungskonstante derart gewählt, dass die die Eigenfrequenzen der Rotorwelle oder der elektrischen Maschine zu höheren Frequenzen hin verschoben werden. Durch das Ausüben einer Vorspannkraft, welche zu einer der vorgebbaren Federkonstante entsprechenden Federkonstante und/oder welche zu einer der vorgebbaren Dämpfungskonstante entsprechenden Dämpfungskonstante führt, kann die Rotorwelle insbesondere stets unterkritisch betrieben werden, wodurch die Stabilität der Rotorwelle bzw. der elektrischen Maschine erhöht wird.

Insbesondere kann das Dämpfungselement auch derart vorspannbar ausgeführt sein, dass die gesamte Anordnung zum gedämpften Lagern eine vorgebbare Federkonstante und/oder eine vorgebbare Dämpfungskonstante aufweist.

Bei einer weiteren vorteilhaften Ausgestaltung der Erfindung ist dabei ein Sensorelement vorgesehen, mittels welchem die Federkonstante des Dämpfungselementes, die Dämpfungskonstante des Dämpfungselementes und/oder die auf das Dämpfungselement wirkende Vorspannkraft erfassbar ist, wobei ein Kraftelement vorgesehen ist, welches mit dem Sensorelement wirkverbunden ist und mittels welchem das Dämpfungselement regelbar vorspannbar ist.

Durch den Einsatz des Sensorelementes und des Kraftelementes wird eine Regelung der Systemschwingungen realisierbar, so dass Eigenfrequenzen gezielt von der Betriebsfrequenz weggeschoben werden können. Hierzu erfasst das Sensorelement zunächst zumindest eine Eingangsgröße, welche beispielsweise die Dämpfungskonstante des Dämpfungselementes ist. Die Eingangsgröße wird mit einer Sollgröße verglichen, beispielsweise der vorgebbaren Dämpfungskonstante, wobei der Vergleich insbesondere durch die oben erläuterte Recheneinheit vorgenommen werden kann. Basierend auf diesem Vergleich wird das Kraftelement insbesondere mittels einer mit der Recheneinheit verbundenen Umrichtereinheit derart beaufschlagt, dass das Dämpfungselement die gewünschte Sollgröße aufweist. Insbesondere kann die Recheneinheit hierzu eine solche Größe einer Vorspannkraft ermitteln, welche die Krafteinheit auf das Dämpfungselement ausüben muss, damit die gewünschte Sollgröße erreicht wird.

Von Vorteil ist dabei insbesondere, dass vorab keine Versuche oder Berechnungen angestellt werden müssen und die Anordnung auch bei geänderten Randbedingungen eine zuverlässige Regelung der Systemschwingungen ermöglicht. Somit können insbesondere Änderungen der Federkonstante bzw. der Dämpfungskonstante des Dämpfungselementes ausgeglichen werden, welche insbesondere durch Temperaturschwankungen oder Alterung hervorgerufen werden können.

Insbesondere kann das Sensorelement derart ausgestaltet sein, dass die Federkonstante der gesamten Anordnung, die Dämpfungskonstante der gesamten Anordnung zum gedämpften Lagern und/oder die auf die gesamte Anordnung zum gedämpften Lagern wirkende Vorspannkraft erfassbar ist.

Beispielsweise weist das Kraftelement zumindest einen Bolzen auf, welcher durch das Dämpfungselement bzw. das Geflecht aus Metalldraht hindurchgeführt wird, wobei an den beiden axialen Enden des jeweiligen Bolzens eine Vorrichtung vorgesehen ist, mittels welcher eine Druck- oder Zugkraft auf das Dämpfungselement bzw. das Geflecht aus Metalldraht ausgeübt werden kann.

Das Sensorelement und das Kraftelement sind dabei insbesondere wie für das oben erläuterte Verfahren zum Betrieb der elektrischen Maschine über die Recheneinheit und die Umrichtereinheit verbunden. Gegebenenfalls kann auch eine direkte Verbindung des Sensorelementes mit dem Kraftelement vorgesehen sein.

Bei einer alternativen vorteilhaften Ausgestaltung der Erfindung ist das Dämpfungselement derart vorspannbar, dass die Rotorwelle und/oder die elektrische Maschine überkritisch betreibbar ist.

Insbesondere wird das Dämpfungselement bei einem überkritischen Betrieb der Rotorwelle bzw. der elektrischen Maschine derart vorgespannt, dass die Dämpfungskonstante des Dämpfungselementes hoch genug für einen stets sicheren Betrieb ist. Dies kann beispielsweise dadurch erreicht werden, dass das Dämpfungselement zumindest eine entsprechende, vorgebbare Dämpfungskonstante aufweist.

Die Vorspannkraft kann beispielsweise derart gewählt werden, dass jene Eigenfrequenzen, welche der Betriebsfrequenz der Rotorwelle bzw. der elektrischen Maschine am nächsten sind, weit genug von der Betriebsfrequenz entfernt sind. Insbesondere kann hierfür eine Eigenfrequenz, welche lediglich leicht unterhalb der Betriebsfrequenz liegt, weiter nach unten verschoben werden, solange die während des Durchfahrens dieser Eigenfrequenz vorhandene Dämpfung mittels des Dämpfungselementes zumindest temporär groß genug ausgebildet werden kann.

Bei einer weiteren vorteilhaften Ausgestaltung der Erfindung ist das Dämpfungselement derart vorspannbar, dass Eigenfrequenzen der gedämpft gelagerten Rotorwelle größer als eine Betriebsfrequenz der elektrische Maschine sind.

Durch ein derart vorgespanntes Dämpfungselement kann die Rotorwelle bzw. die elektrische Maschine zuverlässig unterkritisch betrieben werden, wodurch sich die Stabilität des Systems und insbesondere die Lebensdauer der Lagereinheit erhöht.

Bei einer weiteren vorteilhaften Ausgestaltung der Erfindung weist die Anordnung ein Schildelement auf, welches zwischen der Rotorwelle und dem Gehäuse angeordnet ist, wobei die Lagereinheit und das Dämpfungselement zwischen der Rotorwelle und dem Schildelement oder zwischen dem Gehäuse und dem Schildelement angeordnet sind.

Das Schildelement kann insbesondere derart ausgeführt sein, dass es die Lagereinheit und das Dämpfungselement zumindest teilweise umschließt. Somit kann die gesamte Anordnung zum gedämpften Lagern eine bauliche Einheit bilden, welche insgesamt sehr einfach zu montieren, zu warten und auszutauschen ist.

Beispielsweise kann das Schildelement ringförmig ausgeführt sein und einen L-förmigen oder einen U-förmigen Querschnitt aufweisen und dabei derart angeordnet sein, dass die Einheit aus der Lagereinheit und dem Dämpfungselement in radialer Richtung zum Gehäuse oder zur Rotorwelle von dem Schildelement eingefasst wird. Weiterhin kann bei einem derartigen Querschnitt des Schildelementes eine axiale Einfassung in einer Richtung bzw. in beide Richtungen erreicht werden, wodurch einerseits die Stabilität der gesamten Anordnung zum gedämpften Lagern erhöht wird und andererseits die Montage und Wartung der gesamten Anordnung erleichtert wird.

Vorteilhafterweise berührt das Schildelement dabei nicht gleichzeitig das Gehäuse und die Rotorwelle.

Beispielsweise kann eine elektrische Maschine mit der oben vorgeschlagenen Anordnung zum gedämpften Lagern einer Rotorwelle eine Achshöhe von zumindest 350 mm, insbesondere mehr als 450 mm, aufweisen. Die Anordnung kann bei elektrischen Maschinen eingesetzt werden, welche mit einer elektrischen Leistung von zumindest 250 kW, insbesondere mehr als 1 MW, betreibbar sind.

Im Folgenden wird die Erfindung anhand der in den Figuren dargestellten Ausführungsbeispiele näher beschrieben und erläutert. Es zeigen:
- FIG 1-6: ein erstes bis sechstes Ausführungsbeispiel der erfindungsgemäßen Anordnung zum gedämpften Lagern einer Rotorwelle einer elektrischen Maschine und
- FIG 7: ein Ausführungsbeispiel des Systems zum Durchführen des Verfahrens zum Betrieb einer elektrischen Maschine.

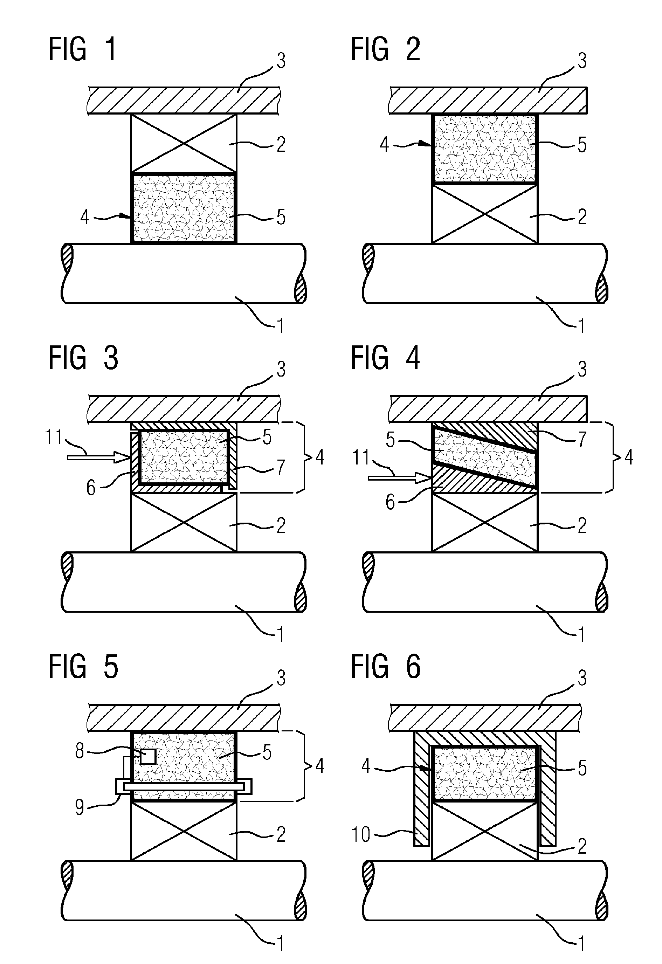

Figur 1 zeigt ein erstes Ausführungsbeispiel der erfindungsgemäßen Anordnung zum gedämpften Lagern einer Rotorwelle 1 einer elektrischen Maschine.

Die Anordnung ist zwischen einem Gehäuse 3 einer elektrischen Maschine und der Rotorwelle 1 der elektrischen Maschine angeordnet und weist eine Lagereinheit 2 und ein Dämpfungselement 4 auf. Dabei weist das Dämpfungselement 4 ein Geflecht aus Metalldraht 5 auf. Gemäß dem ersten Ausführungsbeispiel ist dabei das Dämpfungselement 4 radial weiter innen als das Lagerelement 2 angeordnet. Die Lagereinheit 2 kann beispielsweise als Wälzlager oder als Gleitlager ausgeführt sein.

Figur 2 zeigt ein zweites Ausführungsbeispiel der erfindungsgemäßen Anordnung.

Gleiche Bezugszeichen wie in Figur 1 bezeichnen dabei gleiche Gegenstände. In Abwandlung des ersten Ausführungsbeispiels ist die Anordnung zum gedämpften Lagern derart ausgestaltet, dass das Lagerelement 2 radial weiter innen als das Dämpfungselement 4 angeordnet ist.

Figur 3 zeigt ein drittes Ausführungsbeispiel der erfindungsgemäßen Anordnung.

Die Anordnung zum gedämpften Lagern gemäß dem dritten Ausführungsbeispiel ist jener des zweiten Ausführungsbeispiels ähnlich, wobei das Dämpfungselement 4 einen inneren Ring 6 und einen äußeren Ring 7 aufweist. Das Geflecht aus Metalldraht 5 des Dämpfungselementes 4 ist zwischen dem inneren Ring 6 und dem äußeren Ring 7 angeordnet. Die beiden Ringe 6 und 7 weisen dabei jeweils einen L-förmigen Querschnitt auf und bilden zusammen im Querschnitt betrachtet insbesondere eine in etwa rechteckige Einhausung für das Geflecht aus Metalldraht 5.

Beispielsweise kann auf den inneren Ring 6 eine Vorspannkraft in axialer Richtung aufgebracht werden, wie durch den Pfeil mit dem Bezugszeichen 11 angedeutet.

Eine derartige Einfassung des Geflechtes aus Metalldraht 5 anhand des inneren Ringes 6 und des äußeren Ringes 7 kann ebenfalls bei der Anordnung zum gedämpften Lagern gemäß dem ersten Ausführungsbeispiel vorgesehen sein.

Figur 4 zeigt ein viertes Ausführungsbeispiel der erfindungsgemäßen Anordnung. In Abwandlung des dritten Ausführungsbeispiels weisen der innere Ring 6 und der äußere Ring 7 jeweils einen keilförmigen Querschnitt auf. Dabei verjüngt sich der Keil des inneren Ringes 6 in die eine axiale Richtung, während sich der Keil des äußeren Ringes 7 in die andere axiale Richtung verjüngt. Wiederum ist das Geflecht aus Metalldraht 5 zwischen den beiden Ringen 6 und 7 angeordnet.

Beispielsweise kann auf den inneren Ring 6 eine Vorspannkraft in axialer Richtung aufgebracht werden, wie durch den Pfeil mit dem Bezugszeichen 11 angedeutet.

Eine derartige Einfassung des Geflechtes aus Metalldraht 5 anhand des inneren Ringes 6 und des äußeren Ringes 7 kann ebenfalls bei der Anordnung zum gedämpften Lagern gemäß dem ersten Ausführungsbeispiel vorgesehen sein.

Figur 5 zeigt ein fünftes Ausführungsbeispiel der erfindungsgemäßen Anordnung.

Die Anordnung zum gedämpften Lagern gemäß dem fünften Ausführungsbeispiel ist jener des zweiten Ausführungsbeispiels ähnlich, wobei zusätzlich ein Sensorelement 8 und ein Kraftelement 9 vorgesehen sind. Mittels des Sensorelementes 8 ist eine Federkonstante des Dämpfungselementes 4, eine Dämpfungskonstante des Dämpfungselementes 4 und/oder eine auf das Dämpfungselement 4 wirkende Vorspannkraft erfassbar. Insbesondere ist das Sensorelement 8 hierzu im Dämpfungselement 4 bzw. am Geflecht aus Metalldraht 5 angeordnet.

Das Sensorelement 8 ist mit dem Kraftelement 9 wirkverbunden, mittels welchem das Dämpfungselement 4 regelbar vorspannbar ist. Beispielsweise weist das Kraftelement 9 zumindest einen Bolzen auf, welcher durch das Dämpfungselement 4 bzw. das Geflecht aus Metalldraht 5 hindurchgeführt wird, wobei an den beiden axialen Enden des jeweiligen Bolzens eine Vorrichtung vorgesehen ist, mittels welcher eine Druck- oder Zugkraft auf das Dämpfungselement 4 bzw. das Geflecht aus Metalldraht 5 ausgeübt werden kann.

Die regelbare Vorspannung des Dämpfungselementes 4 mittels des Kraftelementes 9 wird insbesondere dadurch realisiert, dass das Sensorelement 8 zumindest eine Eingangsgröße erfasst, welche beispielsweise die Dämpfungskonstante des Dämpfungselementes 8 ist. Die Eingangsgröße wird mit einer Sollgröße verglichen, beispielsweise einer vorgebbaren Dämpfungskonstante, wobei der Vergleich insbesondere durch eine Recheneinheit einer Steuerung vorgenommen werden kann. Basierend auf diesem Vergleich wird das Kraftelement 9 derart beaufschlagt, dass das Dämpfungselement 4 die gewünschte Sollgröße aufweist. Insbesondere kann die Recheneinheit hierzu eine solche Größe einer Vorspannkraft ermitteln, welche die Krafteinheit 9 auf das Dämpfungselement 4 ausüben muss, damit die gewünschte Sollgröße erreicht wird.

Diese regelbare Vorspannung des Dämpfungselementes 4 kann insbesondere auch bei den Anordnungen zum gedämpften Lagern gemäß dem ersten, dem dritten oder dem vierten Ausführungsbeispiel zum Einsatz kommen.

Figur 6 zeigt ein sechstes Ausführungsbeispiel der erfindungsgemäßen Anordnung.

Die Anordnung zum gedämpften Lagern gemäß dem sechsten Ausführungsbeispiel ist jener des zweiten Ausführungsbeispiels ähnlich, wobei zusätzlich ein Schildelement 10 vorgesehen ist, welches zwischen der Rotorwelle 1 und dem Gehäuse 3 angeordnet ist. Dabei sind die Lagereinheit 2 und das Dämpfungselement 4 zwischen der Rotorwelle 1 und dem Schildelement 10 angeordnet.

Das Schildelement 10 weist einen U-förmigen Querschnitt auf, wobei die Öffnung der U-Form wie im vorliegenden Ausführungsbeispiel zur Rotorwelle hin ausgerichtet sein kann. Dabei sind das Dämpfungselement 4 und die Lagereinheit 2 zumindest teilweise innerhalb der U-Form angeordnet, so dass das Schildelement 10 das Dämpfungselement 4 und die Lagereinheit 2 teilweise einhaust.

Alternativ können die Lagereinheit 2 und das Dämpfungselement 4 zwischen dem Gehäuse 3 und dem Schildelement 10 angeordnet sein. Weist das Schildelement 10 einen U-förmigen Querschnitt auf, so kann die Öffnung der U-Form zum Gehäuse hin ausgerichtet sein.

Vorteilhafterweise berührt das Schildelement 10 nicht gleichzeitig das Gehäuse 3 und die Rotorwelle 1.

Das Schildelement 10 kann insbesondere auch bei den Anordnungen zum gedämpften Lagern gemäß dem ersten, dem dritten, dem vierten oder dem fünften Ausführungsbeispiel zum Einsatz kommen.

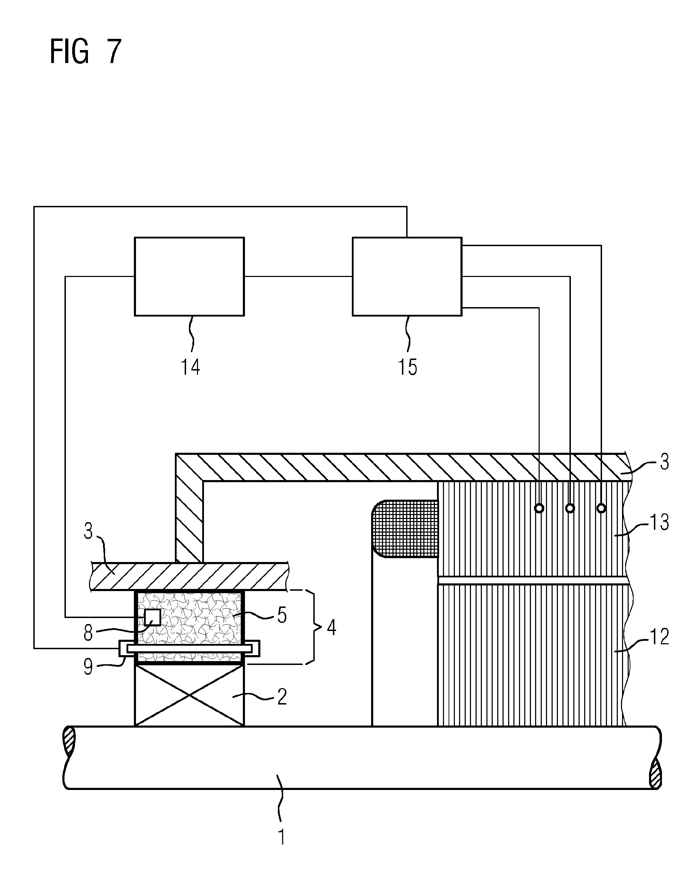

Figur 7 zeigt ein Ausführungsbeispiel des Systems zum Durchführen des Verfahrens zum Betrieb einer elektrischen Maschine.

Das System weist eine Anordnung zum gedämpften Lagern der Rotorwelle 1 auf, welche jener des fünften Ausführungsbeispiels ähnlich ist. Weiterhin weist das System eine Recheneinheit 14 und eine mit der Recheneinheit 14 verbundene Umrichtereinheit 15 auf. Die elektrische Maschine weist einen Rotor 12, welcher ist der Rotorwelle 1 drehfest verbunden ist, und einen Stator 13 auf, welche von der Umrichtereinheit 15 mit elektrischem Strom beaufschlagbar ist.

Mittels des Sensorelementes 8 sind Eigenfrequenzen der gedämpft gelagerten Rotorwelle 1 und/oder der elektrischen Maschine ermittelbar, wobei die Eigenfrequenzen vom Sensorelement 8 an die mit dem Sensorelement 8 verbundene Recheneinheit 14 übermittelt werden können. Die Recheneinheit 14 ist dazu ausgelegt, Sollwerte für das Kraftelement 9 zu ermitteln und an die Umrichtereinheit 15 zu übermitteln. Das Kraftelement 9 ist durch die Umrichtereinheit 15 gemäß den Sollwerten derart beaufschlagbar, dass die Rotorwelle 1 und/oder die elektrische Maschine überkritisch betreibbar ist oder derart, dass die Eigenfrequenzen der gedämpft gelagerten Rotorwelle 1 größer als eine Betriebsfrequenz der elektrischen Maschine sind. Für den Fall, dass die Rotorwelle 1 und/oder die elektrische Maschine überkritisch betreibbar ist, sind die Eigenfrequenzen dabei bis zum Erreichen der Betriebsfrequenz oder des Stillstands mit einer größtmöglichen, zeitlichen Drehzahländerung durchfahrbar.

Die Anordnung zum gedämpften Lagern gemäß dem fünften Ausführungsbeispiel ist jener des zweiten Ausführungsbeispiels ähnlich, wobei

Zusammenfassend betrifft die Erfindung eine Anordnung zum gedämpften Lagern einer Rotorwelle einer elektrischen Maschine. Weiterhin betrifft die Erfindung eine elektrische Maschine mit einer Rotorwelle und zumindest einer derartigen Anordnung. Zusätzlich betrifft die Erfindung ein System zum gedämpften Lagern einer elektrischen Maschine. Ferner betrifft die Erfindung ein Verfahren zum gedämpften Lagern einer Rotorwelle einer derartigen elektrischen Maschine. Schließlich betrifft die Erfindung ein Verfahren zum Betrieb einer derartigen elektrischen Maschine.

Um eine Alternative zum gedämpften Lagern einer Rotorwelle bereitzustellen, wird vorgeschlagen dass die Anordnung eine Lagereinheit, welche zwischen der Rotorwelle und einem Gehäuse der elektrischen Maschine angeordnet ist, und ein Dämpfungselement aufweist, welches zwischen der Lagereinheit und der Rotorwelle oder zwischen der Lagereinheit und dem Gehäuse angeordnet ist, wobei das Dämpfungselement ein Geflecht aus Metalldraht aufweist.

Weiterhin wird zur Lösung dieser Aufgabe vorgeschlagen, dass die elektrische Maschine zumindest eine derartige Anordnung aufweist.

Zusätzlich wird zur Lösung dieser Aufgabe vorgeschlagen, dass das System
- eine Recheneinheit,
- eine Umrichtereinheit und
- zumindest eine Anordnung zum gedämpften Lagern der Rotorwelle aufweist,
   wobei die elektrische Maschine einen Stator und einen Rotor mit einer Rotorwelle aufweist, wobei die Recheneinheit mit der Umrichtereinheit und die Umrichtereinheit mit dem Stator der elektrischen Maschine verbindbar sind, wobei die jeweilige Anordnung eine Lagereinheit, welche zwischen der Rotorwelle und einem Gehäuse der elektrischen Maschine angeordnet ist, und ein Dämpfungselement aufweist, welches zwischen der Lagereinheit und der Rotorwelle oder zwischen der Lagereinheit und dem Gehäuse angeordnet ist, wobei das Dämpfungselement ein Geflecht aus Metalldraht aufweist, wobei die jeweilige Anordnung ein Sensorelement und ein mit dem Sensorelement wirkverbundenes Kraftelement aufweist, wobei Eigenfrequenzen der gedämpft gelagerten Rotorwelle und/oder der elektrischen Maschine mittels des Sensorelementes ermittelbar sind, wobei die Eigenfrequenzen vom Sensorelement an die Recheneinheit übermittelbar sind, wobei Sollwerte für das Kraftelement durch die Recheneinheit ermittelbar sind, wobei die Sollwerte von der Recheneinheit an die Umrichtereinheit übermittelbar sind, wobei das Kraftelement durch die Umrichtereinheit gemäß den Sollwerten derart beaufschlagbar ist, dass das Dämpfungselement mittels des Kraftelementes derart beaufschlagbar ist, dass die Rotorwelle und/oder die elektrische Maschine überkritisch betreibbar ist oder derart, dass Eigenfrequenzen der gedämpft gelagerten Rotorwelle größer als eine Betriebsfrequenz der elektrische Maschine sind, wobei, falls die Rotorwelle und/oder die elektrische Maschine überkritisch betreibbar ist, die Eigenfrequenzen bis zum Erreichen der Betriebsfrequenz oder des Stillstands mit einer größtmöglichen, zeitlichen Drehzahländerung durchfahrbar sind.

Ferner wird zur Lösung dieser Aufgabe ein Verfahren zum gedämpften Lagern einer Rotorwelle einer derartigen elektrischen Maschine vorgeschlagen, wobei die jeweilige Anordnung eine Lagereinheit, welche zwischen der Rotorwelle und einem Gehäuse der elektrischen Maschine angeordnet ist, und ein Dämpfungselement aufweist, welches zwischen der Lagereinheit und der Rotorwelle oder zwischen der Lagereinheit und dem Gehäuse angeordnet ist, wobei das Dämpfungselement ein Geflecht aus Metalldraht aufweist, wobei die jeweilige Anordnung ein Sensorelement und ein mit dem Sensorelement wirkverbundenes Kraftelement aufweist, aufweisend die Verfahrensschritte:
- Erfassen einer Federkonstante des Dämpfungselementes, einer Dämpfungskonstante des Dämpfungselementes und/oder einer auf das Dämpfungselement wirkenden Vorspannkraft mittels des Sensorelementes,
- Regelbares Vorspannen des Dämpfungselementes mittels des Kraftelementes derart, dass die Rotorwelle und/oder die elektrische Maschine überkritisch betreibbar ist oder derart, dass Eigenfrequenzen der gedämpft gelagerten Rotorwelle größer als eine Betriebsfrequenz der elektrische Maschine sind.

Schließlich wird zur Lösung dieser Aufgabe ein Verfahren zum Betrieb einer elektrischen Maschine vorgeschlagen, wobei die elektrische Maschine einen Stator und einen Rotor mit einer Rotorwelle aufweist, wobei eine Recheneinheit und eine Umrichtereinheit vorgesehen sind, wobei die Recheneinheit mit der Umrichtereinheit und die Umrichtereinheit mit dem Stator der elektrischen Maschine verbunden sind, wobei zumindest eine Anordnung zum gedämpften Lagern der Rotorwelle vorgesehen ist, wobei die jeweilige Anordnung eine Lagereinheit, welche zwischen der Rotorwelle und einem Gehäuse der elektrischen Maschine angeordnet ist, und ein Dämpfungselement aufweist, welches zwischen der Lagereinheit und der Rotorwelle oder zwischen der Lagereinheit und dem Gehäuse angeordnet ist, wobei das Dämpfungselement ein Geflecht aus Metalldraht aufweist, wobei die jeweilige Anordnung ein Sensorelement und ein mit dem Sensorelement wirkverbundenes Kraftelement aufweist,
aufweisend die Verfahrensschritte:
- Ermitteln der Eigenfrequenzen der gedämpft gelagerten Rotorwelle und/oder der elektrischen Maschine mittels des Sensorelementes,
- Übermitteln der Eigenfrequenzen vom Sensorelement an die Recheneinheit,
- Ermitteln von Sollwerten für das Kraftelement durch die Recheneinheit,
- Übermitteln der Sollwerte von der Recheneinheit an die Umrichtereinheit,
- Beaufschlagen des Kraftelementes durch die Umrichtereinheit gemäß den Sollwerten derart, dass das Dämpfungselement mittels des Kraftelementes derart beaufschlagt wird, dass die Rotorwelle und/oder die elektrische Maschine überkritisch betreibbar ist oder derart, dass Eigenfrequenzen der gedämpft gelagerten Rotorwelle größer als eine Betriebsfrequenz der elektrische Maschine sind,
- falls die Rotorwelle und/oder die elektrische Maschine überkritisch betrieben wird: Durchfahren der Eigenfrequenzen bis zum Erreichen der Betriebsfrequenz oder des Stillstands mit einer größtmöglichen, zeitlichen Drehzahländerung.

## Patentansprüche

1. Anordnung zum gedämpften Lagern einer Rotorwelle (1) einer elektrischen Maschine, wobei die Anordnung aufweist:
- eine Lagereinheit (2), welche zwischen der Rotorwelle (1) und einem Gehäuse (3) der elektrischen Maschine angeordnet ist, und
- ein Dämpfungselement (4), welches zwischen der Lagereinheit (2) und der Rotorwelle (1) oder zwischen der Lagereinheit (2) und dem Gehäuse (3) angeordnet ist,
wobei das Dämpfungselement (4) ein Geflecht aus Metalldraht (5) aufweist.

2. Anordnung nach Anspruch 1,
wobei die Lagereinheit (2) als Wälzlager oder als Gleitlager ausgebildet ist.

3. Anordnung nach einem der vorhergehenden Ansprüche,
wobei das Dämpfungselement (4) einen inneren Ring (6) und einen äußeren Ring (7) aufweist,
wobei das Geflecht aus Metalldraht (5) zwischen dem inneren Ring (6) und dem äußeren Ring (7) angeordnet ist.

4. Anordnung nach Anspruch 3,
wobei der innere Ring (6) und/oder der äußere Ring (7) einen L-förmigen Querschnitt aufweist.

5. Anordnung nach Anspruch 3,
wobei der innere Ring (6) und/oder der äußere Ring (7) einen keilförmigen Querschnitt aufweist.

6. Anordnung nach einem der vorhergehenden Ansprüche,
wobei das Dämpfungselement (4) eine Federkonstante, eine Dämpfungskonstante und Eigenfrequenzen aufweist,
wobei das Dämpfungselement (4) derart vorspannbar ist, dass das Dämpfungselement (4) eine vorgebbare Federkonstante, eine vorgebbare Dämpfungskonstante und/oder vorgebbare Eigenfrequenzen aufweist.

7. Anordnung nach Anspruch 6,
wobei ein Sensorelement (8) vorgesehen ist, mittels welchem die Federkonstante des Dämpfungselementes (4), die Dämpfungskonstante des Dämpfungselementes (4) und/oder die Eigenfrequenzen des Dämpfungselementes (4) erfassbar sind,
wobei ein Kraftelement (9) vorgesehen ist, welches mit dem Sensorelement (8) wirkverbunden ist und mittels welchem das Dämpfungselement (4) regelbar vorspannbar ist.

8. Anordnung nach einem der vorhergehenden Ansprüche,
wobei das Dämpfungselement (4) derart vorspannbar ist, dass die Rotorwelle (1) und/oder die elektrische Maschine überkritisch betreibbar ist.

9. Anordnung nach einem der Ansprüche 1-7,
wobei das Dämpfungselement (4) derart vorspannbar ist, dass Eigenfrequenzen der gedämpft gelagerten Rotorwelle (1) größer als eine Betriebsfrequenz der elektrische Maschine sind.

10. Anordnung nach einem der vorhergehenden Ansprüche,
wobei die Anordnung ein Schildelement (10) aufweist, welches zwischen der Rotorwelle (1) und dem Gehäuse (3) angeordnet ist,
wobei die Lagereinheit (2) und das Dämpfungselement (4) zwischen der Rotorwelle (1) und dem Schildelement (10) oder zwischen dem Gehäuse (3) und dem Schildelement (10) angeordnet sind.

11. System zum gedämpften Lagern einer elektrischen Maschine, wobei die elektrische Maschine einen Stator (13) und einen Rotor (12) mit einer Rotorwelle (1) aufweist,
wobei das System umfasst:
- eine Recheneinheit (14),
- eine Umrichtereinheit (15),
- zumindest eine Anordnung zum gedämpften Lagern der Rotorwelle (1),
wobei die Recheneinheit (14) mit der Umrichtereinheit (15) und die Umrichtereinheit (15) mit dem Stator (13) der elektrischen Maschine verbindbar sind,
wobei die jeweilige Anordnung eine Lagereinheit (2), welche zwischen der Rotorwelle (1) und einem Gehäuse (3) der elektrischen Maschine angeordnet ist, und ein Dämpfungselement (4) aufweist, welches zwischen der Lagereinheit (2) und der Rotorwelle (1) oder zwischen der Lagereinheit (2) und dem Gehäuse (3) angeordnet ist,
wobei das Dämpfungselement (3) ein Geflecht aus Metalldraht (5) aufweist,
wobei die jeweilige Anordnung ein Sensorelement (8) und ein mit dem Sensorelement (8) wirkverbundenes Kraftelement (9) aufweist,
wobei Eigenfrequenzen der gedämpft gelagerten Rotorwelle (1) und/oder der elektrischen Maschine mittels des Sensorelementes (8) ermittelbar sind,
wobei die Eigenfrequenzen vom Sensorelement (8) an die Recheneinheit (14) übermittelbar sind,
wobei Sollwerte für das Kraftelement (9) durch die Recheneinheit (14) ermittelbar sind,
wobei die Sollwerte von der Recheneinheit (14) an die Umrichtereinheit (15) übermittelbar sind,
wobei das Kraftelement (9) durch die Umrichtereinheit (15) gemäß den Sollwerten derart beaufschlagbar ist, dass das Dämpfungselement (4) mittels des Kraftelementes (9) derart beaufschlagbar ist, dass die Rotorwelle (1) und/oder die elektrische Maschine überkritisch betreibbar ist oder derart, dass Eigenfrequenzen der gedämpft gelagerten Rotorwelle (1) größer als eine Betriebsfrequenz der elektrische Maschine sind,
wobei, falls die Rotorwelle (1) und/oder die elektrische Maschine überkritisch betreibbar ist, die Eigenfrequenzen bis zum Erreichen der Betriebsfrequenz oder des Stillstands mit einer größtmöglichen, zeitlichen Drehzahländerung durchfahrbar sind.

12. Elektrische Maschine umfassend
- eine Rotorwelle (1) und
- zumindest eine Anordnung zum gedämpften Lagern der Rotorwelle (1) nach einem der Ansprüche 1-10 oder ein System zum gedämpften lagern einer elektrischen Maschine nach Anspruch 11.

13. Verfahren zum gedämpften Lagern einer Rotorwelle (1) einer elektrischen Maschine,
wobei zumindest eine Anordnung zum gedämpften Lagern der Rotorwelle (1) vorgesehen ist,
wobei die jeweilige Anordnung eine Lagereinheit (2), welche zwischen der Rotorwelle (1) und einem Gehäuse (3) der elektrischen Maschine angeordnet ist, und ein Dämpfungselement (4) aufweist, welches zwischen der Lagereinheit (2) und der Rotorwelle (1) oder zwischen der Lagereinheit (2) und dem Gehäuse (3) angeordnet ist,
wobei das Dämpfungselement (3) ein Geflecht aus Metalldraht (5) aufweist,
wobei die jeweilige Anordnung ein Sensorelement (8) und ein mit dem Sensorelement (8) wirkverbundenes Kraftelement (9) aufweist,
aufweisend die Verfahrensschritte:
- Erfassen einer Federkonstante des Dämpfungselementes (4), einer Dämpfungskonstante des Dämpfungselementes (4) und/oder von Eigenfrequenzen des Dämpfungselementes (4) mittels des Sensorelementes (8),
- Regelbares Vorspannen des Dämpfungselementes (4) mittels des Kraftelementes (9) derart, dass die Rotorwelle (1) und/oder die elektrische Maschine überkritisch betreibbar ist oder derart, dass Eigenfrequenzen der gedämpft gelagerten Rotorwelle (1) größer als eine Betriebsfrequenz der elektrische Maschine sind.

14. Verfahren zum Betrieb einer elektrischen Maschine, wobei die elektrische Maschine einen Stator (13) und einen Rotor (12) mit einer Rotorwelle (1) aufweist,
wobei eine Recheneinheit (14) und eine Umrichtereinheit (15) vorgesehen sind, wobei die Recheneinheit (14) mit der Umrichtereinheit (15) und die Umrichtereinheit (15) mit dem Stator (13) der elektrischen Maschine wirkverbunden sind,
wobei zumindest eine Anordnung zum gedämpften Lagern der Rotorwelle (1) vorgesehen ist,
wobei die jeweilige Anordnung eine Lagereinheit (2), welche zwischen der Rotorwelle (1) und einem Gehäuse (3) der elektrischen Maschine angeordnet ist, und ein Dämpfungselement (4) aufweist, welches zwischen der Lagereinheit (2) und der Rotorwelle (1) oder zwischen der Lagereinheit (2) und dem Gehäuse (3) angeordnet ist,
wobei das Dämpfungselement (3) ein Geflecht aus Metalldraht (5) aufweist,
wobei die jeweilige Anordnung ein Sensorelement (8) und ein mit dem Sensorelement (8) wirkverbundenes Kraftelement (9) aufweist,
aufweisend die Verfahrensschritte:
- Ermitteln der Eigenfrequenzen der gedämpft gelagerten Rotorwelle (1) und/oder der elektrischen Maschine mittels des Sensorelementes (8),
- Übermitteln der Eigenfrequenzen vom Sensorelement (8) an die Recheneinheit (14),
- Ermitteln von Sollwerten für das Kraftelement (9) durch die Recheneinheit (14),
- Übermitteln der Sollwerte von der Recheneinheit (14) an die Umrichtereinheit (15),
- Beaufschlagen des Kraftelementes (9) durch die Umrichtereinheit (15) gemäß den Sollwerten derart, dass das Dämpfungselement (4) mittels des Kraftelementes (9) derart beaufschlagt wird, dass die Rotorwelle (1) und/oder die elektrische Maschine überkritisch betreibbar ist oder derart, dass Eigenfrequenzen der gedämpft gelagerten Rotorwelle (1) größer als eine Betriebsfrequenz der elektrische Maschine sind,
- falls die Rotorwelle (1) und/oder die elektrische Maschine überkritisch betrieben wird: Durchfahren der Eigenfrequenzen bis zum Erreichen der Betriebsfrequenz oder des Stillstands mit einer größtmöglichen, zeitlichen Drehzahländerung.
